# EUROPÄISCHE PATENTSCHRIFT

(11) **EP 0 771 995 B1**
(45) Veröffentlichungstag und Bekanntmachung des Hinweises auf die Patenterteilung: **21.05.1997**
(21) Anmeldenummer: 95118686.5
(22) Anmeldetag: 28.11.1995
(51) Int. Cl.: F16L 59/06

(54) **Verfahren zum Herstellen von Superisolierungspaneelen und Superisolierungspaneele selbst, sowie ihre Verwendung**
Method for making superinsulation panel, superinsulation panel and its application
Procédé de construction d'un panneau superisolant, panneau superisolant et son utilisation

(43) Veröffentlichungstag der Anmeldung: 07.05.1997
(73) Patentinhaber: G + H MONTAGE GMBH, D-67059 Ludwigshafen (DE)
(72) Erfinder: Wild, Yves, Dr.-Ing., D-22765 Hamburg (DE); Matthies, René, Dipl.-Ing., D-17268 Templin (DE); Oberacker, Rolf, D-20144 Hamburg (DE); Idler, Lothar, Dipl.-Ing., D-21033 Hamburg (DE)
(74) Vertreter: Fleck, Thomas, Dr. Dipl.-Chem.

(56) Entgegenhaltungen:
- EP-A- 0 012 038
- DE-A- 2 750 457
- DE-A- 3 414 665
- GB-A- 865 391
- US-A- 4 924 679

## Beschreibung

Die vorliegende Erfindung betrifft ein Verfahren zum Herstellen von Superisolierungspaneelen nach dem Oberbegriff des Anspruches 1 und Superisolierungspaneele selbst, sowie ihre Verwendung.

Die DE-OS 27 50 457 betrifft eine thermische Isolationsstruktur mit einer hermetisch abgedichteten Kammer. Nach der ersten Ausführungsform bilden flexible Wandungen 10 und 12 diese Kammer aus, während nach der zweiten Ausführungsform starre Wandungen 20 und 22 mit starren Seitenwandungen diese Kammer bilden. Weitere Angaben werden hierzu nicht gemacht. Die im Anspruch 2 erwähnten metallisierten Kunstharzfilme werden hingegen der Isolation 14 beigemischt, wie dieses auf Seite 5 im vierten Absatz ausgeführt wird. Nirgends findet sich deshalb in diesem Dokument eine Angabe oder liegt es für den Fachmann irgendwie nahe, als Umhüllung oder Behältnis eine diffusionsdichte Kunststoffmetallverbundfolie einzusetzen, die nach dem Befüllen mit Mikrohohlglaskugeln und der Spülung mit CO₂ zugeschweißt wird. Letzteres stellt jedoch gerade das erfinderische Moment der vorliegenden Erfindung dar.

Hier vermag auch die Lehre der EP-A-0012 038 nicht weiterzuhelfen. Zwar wird auch hier eine Superisolierung mit Mikrohohlglaskugeln beschrieben, die Umhüllung 18,20 ist jedoch doppelwandig und wird blas- oder vakuumgeformt.

Im Stand der Technik sind ferner Wärmedämmkassetten aus der DE-OS 44 13 796 bekanntgeworden, die der Anmelderin zuzurechnen ist. Nach dieser vorbekannten Lehre werden als Dämmstoff vorverdichtete, druckbeständige Mikrohohlglaskugeln als Paneel verpresst und mit einer perforierten Wärmestrahlungsdämmfolie umhüllt, wobei die Kassette durch einen prismatischen Körper gebildet ist, um eine optimale Wärmedämmung zu erzielen. Nachteilig hat sich jedoch bemerkbar gemacht, daß auch in einem Druckbereich von ca. 0,1 mbar die Wärmedämmung nicht mehr weiter verbessert werden konnte.

Außer diesen vorbekannten Wärmedämmkassetten gibt es unter den Vakuumtechniken noch die sog. Foliensuperisolation, Perlitschüttungen und noch weitere Paneele, die einen anderen Aufbau besitzen, jedoch eine Modulbauweise nicht gestatten.

Der vorliegenden Erfindung liegt deshalb die Aufgabe zugrunde, das eingangs genannte Verfahren zum Herstellen von Superisolierungspaneelen derart weiterzubilden, daß die damit hergestellten Paneele bei tiefen Temperaturen eine Verbesserung der Wärmedämmung gewährleisten. Ein weiteres Ziel der Erfindung ist es, Superisolierungspaneele zu schaffen, die in Modulbauweise leicht und schnell handhabbar sind, ohne daß ihre jahrelange Lebensdauer im Alltagseinsatz beeinträchtigt wird.

Diese Aufgabe bzw. das Ziel wird erfindungsgemäß durch das im Anspruch 1 gekennzeichnete Verfahren bzw. die Superisolierungspaneele gemäß Anspruch 5 und ihre Verwendung gemäß Anspruch 9 gelöst.

Die Erfindung geht also davon aus, daß eine diffusionsdichte Verbundfolie und nicht mehr eine perforierte Wärmestrahlungsdämmfolie mit prismatischem Kassettenkörper eingesetzt wird. Die erfindungsgemäß eingesetzte Verbundfolie besteht aus einem Kunststoffträger, insbesondere Polystyrol, Nylon oder andere Kunststoffe, wobei auf diesen Träger eine Metallschicht, insbesondere Aluminium oder VA-Stahl, aufgedampft ist. Diese Metallschicht ist erforderlich, um die Folie diffusionsdicht zu bekommen, die andererseits so dünn wie möglich sein muß, da sie die größte Wärmebrücke darstellt. Es dürfte einleuchten, daß die erfindungsgemäß eingesetzte Verbundfolie auch bei äußerst tiefen Temperaturen jahrelange Haltbarkeit gewährleisten muß. Insbesondere sollte die erfindungsgemäß eingesetzte Metallschicht oder -bedampfung eine Schichtstärke von geringer als 1,0 µm besitzen, um die gewünschte Superisolierung zu erzielen. Edelstahlfolien im Bereich von 0,1 mm Stärke, wie sie im Stand der Technik gelegentlich verwendet werden, sind viel zu dick und machen als Wärmebrücke die in der Mitte auftretende Superisolierung zunichte.
Nach dem Befüllen mit Mikrohohlglaskugeln wird die Kunststoffmetallverbundfolie, bevor sie an der Absaugöffnung verschlossen wird, mit Kohlendioxid ein- oder mehrfach gespült, um Luftreste aus dem Verbundfolienbehältnis zu entfernen. Es hat sich nämlich überraschenderweise ergeben, daß beim späteren Einsatz der Paneele im kryogenen Bereich das noch vorhandene Kohlendioxid ausfriert, wodurch das Vakuum noch weiter erhöht wird und vorteilhafterweise Wärmeleitfähigkeitswerte geringer als 0,01 W/mK im Temperatureinsatzbereich von etwa 20 bis 130 Kelvin erzielt werden.

Weitere Vorteile und Merkmale, die gemeinsam mit dem Hauptanspruch von erfindungsgemäßer Bedeutung sein können, sind in den Unter- und Nebenansprüchen angegeben.

Im folgenden wird ein Ausführungsbeispiel der Erfindung anhand der Zeichnung im Detail näher erläutert.

Es zeigt:
- Fig. 1: eine perspektivische Ansicht eines erfindungsgemäßen Superisolierungspaneels;
- Fig. 2: einen Querschnitt durch die in Fig. 1 eingesetzte Verbundfolie; und
- Fig. 3: eine grafische Darstellung von Wärmeleitfähigkeitsmessungen an erfindungsgemäßen Superisolierungspaketen im Verhältnis zu Angaben des Standes der Technik.

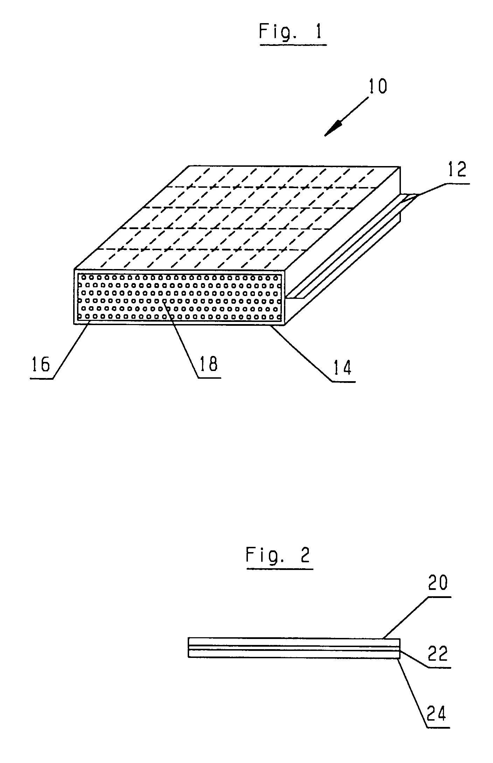

In Fig. 1 ist das erfindungsgemäße Superisolierungspaneel 10 in perspektivischer Ansicht gezeigt und besteht aus einem "ziegelartigen" Körper mit rechteckigem Grundriß. Das Superisolierungspaket weist eine Breite von 410 mm x 330 mm Länge auf, bei einer Höhe von 80 mm. Es wiegt insgesamt 1,55 kg. Es dürfte für den Fachmann jedoch ohne weiteres einleuchten, daß gewisse, vernünftige Dimensionierungen der eben gemachten Angaben möglich sind. Insbesondere ist an relativ große Paneel-Module gedacht, da hierdurch relativ wenige Wärmebrücken entstehen. So kann die Länge beispielsweise 50 bis 150 cm, die Breite 10 bis 150 cm und die Höhe 30 bis 100 mm betragen. Das Gewicht eines erfindungsgemäßen Superisolierungspaneels sollte im Prinzip zwischen 1 und 2 kg liegen. Die Umhüllung oder das Behältnis besteht aus einer diffusionsdichten Kunststoff-Metall-Verbundfolie 14, in deren Inneren die Mikrohohlglaskugeln 18 aus alkaliarmem Borosilikatglas aufgenommen sind, die per se im Stand der Technik als Zusatzstoffe in der Farbindustrie und zur Schwingungsdämpfung bekannt sind, siehe z.B. Scotchlite™-Glasbubble, die beispielsweise besonders leicht (0,125 g/cm³) und besonders druckfest (17 bar) sind, wobei der mittlere Teildurchmesser 70µ oder 177µ betragen kann. Nach Schüttung weisen die Kugeln noch 50 bis 60 % der Nennrohdichte auf, die durch Verpressen mit ca. 0,5 bis 0,8 bar wieder auf 80 bis 90% der Nennrohdichte erhöht wird. Diese Angaben zu den Mikrohohlglaskugeln 18 sind für die Erfindung in keiner Weise zwingend. Auch hier kann der Fachmann im geeigneten Rahmen beliebige Veränderungen vornehmen.

Die in Fig. 1 als Umhüllung verwendete Verbundfolie 14 weist einen Aufbau auf, wie er in Fig. 2 im Querschnitt gezeigt wird, nämlich eine Kunststoff-Folie 20, die mit einer 0,3 µm Aluminiumschicht 22 versehen oder mit Aluminium bedampft sein kann, wobei letzteres bevorzugt ist. Als Kunststoff kann Polystyrol oder Nylon oder Polyester eingesetzt werden, andere Materialien sind ebenfalls denkbar. Die Dicke dieser mit Aluminium 22 bedampften und mit PE 24 beschichteten Polystyrolfolie 20 beträgt 80 bis 90 µm. Ohne die PE-Folie 24 beträgt die Stärke der Kunststoff-Metall-Verbundfolie 20, 22 etwa 10 - 15 µm. Auch hier sind abweichende Werte denkbar, jedoch sollte die Metallschicht eine geringere Dicke als 1,0 µm aufweisen. Die Außenseite der Verbundfolie ist mit einer Polyethylenschicht 24 versehen, um eine hochdichte Versiegelung oder Verschweißung der nichtgezeigten Absaugöffnung durch die Naht 12 zu ermöglichen. In Fig. 1 ist die Schweißnaht 12 gezeigt, wie sie über die Gesamtlänge des Superisolierungspaneels 10 verläuft. Kürzere Längen sind hier jedoch für die Schweißnaht 12 ebenfalls denkbar. Die Schweißnaht sollte in ihrer Breite im Bereich von 5 bis 10 mm liegen.

In Abhängigkeit von der Sorte der verwendeten Mikrohohlglaskugeln 18 und/oder der weiteren Versuchsbedingungen, die z.B. die Größe der Absaugöffnung oder des angelegten Vakuums betreffen, kann es erforderlich werden, die Mikrohohlglaskugeln 18 vor der Evakuierung von einer weiteren Umhüllung oder Behältnis aufzunehmen, das z.B. die Form eines Filterpapiers 16 in "Tütenform" besitzen kann, um ein Absaugen der Kugeln oder Kügelchen 18 beim Evakuieren zu verhindern. Andererseits ist es natürlich auch denkbar, ein Filtermaterial vor der Absaugöffnung (nicht gezeigt) anzuordnen.

Ebenso ist es denkbar, daß nicht nur eine metallbedampfte Folie, sondern zwei oder mehr vorgesehen werden, um die Vakuumwirkung und die dadurch erzeugte Wärmedämmung noch stärker zu begünstigen.

Bei allen Vorgehensweisen ist es jedoch von besonderer erfindungsgemäßer Bedeutung, daß das mit Mikrohohlglaskugeln gefüllte Superisolierungspaneel 10 mit hochreinem CO₂ ein- oder mehrfach gespült wird. Hierfür wurde nach einem Evakuierungsvorgang die Vakuumkammer mit CO₂ geflutet. Anschließend wurde erneut evakuiert. Ziel war es hierbei, die verbleibende Luft aus dem Behältnis zu entfernen und durch CO₂ zu ersetzen. Da CO₂/Kohlendioxid bei -78,5°C gefriert (bei Umgebungsdruck), wird unterhalb der Gefriertemperatur das Vakuum durch Ausfallen des Kohlendioxids wesentlich erhöht. Dabei kann der Fachmann entsprechenden Tabellen entnehmen, wie sich das CO₂ bei niedrigen Drücken verhält.

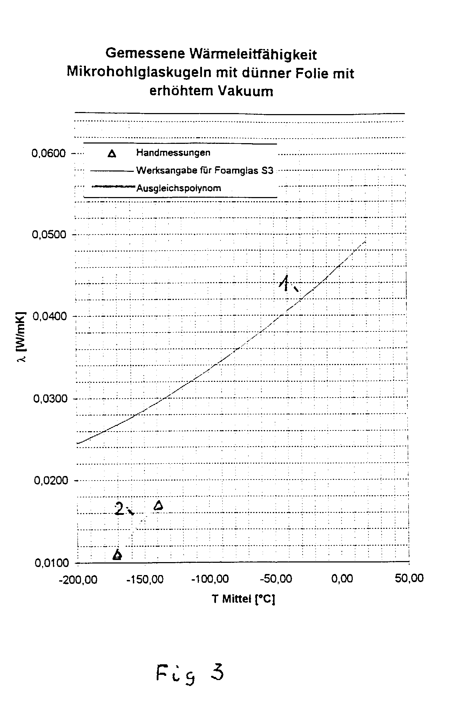

In Fig. 3 werden Wärmeleitfähigkeitsmessungen im Temperaturbereich von +20°C bis -200°C verglichen. Der mit 1 gekennzeichnete Kurvenverlauf stellt eine Werksangabe für die Wärmeleitfähigkeitsmessungen für Foamglas S3 dar, der bei -130°C im Bereich von 0,03 W/mK liegt. Demgegenüber zeigt der mit 2 gekennzeichnete Kurvenverlauf für Wärmeleitfähigkeitsmessungen mit erfindungsgemäßen Superisolierungspaneelen stark verbesserte Werte. Diese liegen bei -130°C im Bereich von 0,017 und senken sich bei tieferen Temperaturen im Bereich von -170°C auf Werte um 0,01 W/mK ab, wobei noch tiefere Werte im Temperatureinsatzbereich von etwa 20 bis -130 Kelvin vorliegen.

Die erfindungsgemäße Verfahrensweise stellt also sicher, daß nach den Spülungen mit Kohlendioxid bei einem angelegten Vakuum von etwa 0,1 mbar Wärmeleitfähigkeitswerte im Bereich von 0,01 W/mK erzielt werden.

Ein typischer Verwendungszweck für die erfindungsgemäßen Superisolierungspaneele 10 ist die Wärmedämmung unterschiedlich geometrisch gestalteter Transportbehälter, die mit kryogenen Gasen befüllt sind.

## Patentansprüche

1. Verfahren zum Herstellen von Superisolierungspaneelen (10), bei dem Mikrohohlglaskugeln (18) in eine folienartige Umhüllung oder Behältnis gegeben werden, die bzw. das mit Hochleistungsvakuumpumpen über eine Absaugöffnung evakuiert, mit Kohlendioxid ein- oder mehrfach gespült und dieselbe verschlossen (12) wird, dadurch gekennzeichnet, daß als Umhüllung oder Behältnis eine diffusionsdichte Kunststoff-Metall-Verbundfolie (14) eingesetzt wird, und nach dem Befüllen mit Mikrohohlglaskugeln und der Spülung mit CO₂ zugeschweißt wird, so daß beim späteren Einsatz der Paneele im kryogenen Bereich das noch vorhandene Kohlendioxid zur Erhöhung des Vakuums ausfriert.

2. Verfahren nach Anspruch 1, dadurch gekennzeichnet, daß die Mikrohohlglaskugeln vor der Evakuierung von einer weiteren Umhüllung oder Behältnis aufgenommen werden, oder beim Evakuieren ein Filtermaterial vor der Absaugöffnung angeordnet ist.

3. Verfahren nach Anspruch 1 oder 2, dadurch gekennzeichnet, daß die Absaugöffnung in der Kunststoff-Metall-Verbundfolie-Umhüllung (14) durch eine aufgetragene Polyethylenschicht (24) zugeschweißt wird.

4. Verfahren nach den Ansprüchen 1 bis 3, dadurch gekennzeichnet, daß nach der bzw. den Spülungen mit Kohlendioxid ein Vakuum von 0,1 mbar gezogen wird, so daß Wärmeleitfähigkeitswerte < 0,01 W/mK im Temperatureinsatzbereich von etwa 20 - 130 K erzielt werden.

5. Superisolierungspaneele (10) hergestellt nach einem oder mehreren der vorstehenden Verfahrensansprüche, dadurch gekennzeichnet, daß die Metallschicht oder -bedampfung (22) eine Schichtstärke < als 1,0 µm besitzt.

6. Superisolierungspaneele (10) nach Anspruch 5, gekennzeichnet durch eine oder zwei Aluminiumbedampfungen (22) mit einer Schichtstärke von jeweils 0,3 - 0,5 µm.

7. Superisolierungspaneele (10) nach Anspruch 5 und 6, gekennzeichnet durch eine ziegel- oder kissenartige Paketform mit quadratisch oder rechteckigem Grundriss.

8. Superisolierungspaneele (10) nach Anspruch 5 und 6, gekennzeichnet durch eine Breite von 10 bis 150 cm, eine Länge von 50 - 150 cm, eine Höhe von 30 - 100 mm, bei einem Gewicht von 1 - 2 kg/Modul.

9. Verwendung einer Vielzahl von Superisolierungspaneelen oder -paketen (10) in Modulbauweise nach einem oder mehreren der vorstehenden Ansprüche 5 bis 8 für Transportbehälter tiefkalter Gase und/oder Flüssigkeiten bis zu einer Temperatur im Behälterinneren von 20° K.

## Claims

1. Method for the manufacture of superinsulating panels (10), in which micro-hollow glass balls (18) are fed into a film-like envelope or receptacle, which is evacuated with high power vacuum pumps by means of a suction opening and scavenged one or more times with carbon dioxide, which is then closed (12), characterized in that as an envelope or receptacle is used a diffusion-tight plastic-metal composite film (14) which, after filling with micro-hollow glass balls and scavenging with CO₂ is closed, so that during the subsequent use of the panels in the cryogenic range, the carbon dioxide still present is frozen out for increasing the vacuum.

2. Method according to claim 1 or 2, wherein the microw-hollow glass balls are received by a further envelope or receptacle prior to evacuation, or during evacuation a filter material is placed in front of the suction opening.

3. Method according to claim 1 or 3, wherein the suction opening in the plastic-metal composite film envelope (14) is welded closed by an applied poylethylene coating (24).

4. Method according to claim 1 to 3, wherein after scavenging with carbon dioxide a vauum of 0.1 mbar is applied, so that thermal conductivity values of <0.01 W/mK are obtained in the temperature use range of approximately 20 to 130 K.

5. Superinsulating panel (10) produced to one or more of the preceeding method claims, wherein the metal coating or metallization (22) has a thickness of <1.0 µm.

6. Superinsulating panel (10) according to claim 5, wherein there are one or two aluminium metallizations (22) with a coating thickness of in each case 0.3 to 0.5 µm.

7. Superinsulating panel (10) according to claim 5, wherein there is a tile or cushion-like pack shape with a square or rectangular plan view.

8. Superinsulating panel (10) according to claim 5, wherein the width is 10 to 150 cm, the length 50 to 150 cm, the height 30 to 100 mm and the weight is 1 to 2 kg/module.

9. Use of a plurality of superinsulating panels or packs (10) in modular construction according to one or more of the preceeding claims 5 to 8 for transportation containers for cryogenic gases and/or liquids down to a temperature in the container interior of 20°K.

## Revendications

1. Procédé de construction de panneau superisolants (10) dans lequel des microbilles en verre creux (18) sont introduites dans une enveloppe ou un récipient de type feuille qui fait l'objet d'un vide avec des pompes à vide à haut débit au moyen d'un orifice d'aspiration, qui est lavé une fois ou plusieurs fois avec du dioxyde de carbone et qui est fermé (12), caractérisé en ce qu'une feuille composite plastique-métal (14) étanche à la diffusion est utilisée comme enveloppe ou récipient et est soudée après le remplissage avec des microbilles en verre creux et le lavage avec du CO₂, de façon que le dioxyde de carbone encore présent gèle pour augmenter le vide lors de l'utilisation ultérieure des panneaux dans la plage cryogénique.

2. Procédé selon la revendication 1, caractérisé en ce que les microbilles en verre creux sont reçues, avant l'obtention du vide, par une autre enveloppe ou un autre récipient ou bien un matériau filtre est disposé devant l'orifice d'aspiration lors de l'obtention du vide.

3. Procédé selon la revendication 1 ou 2, caractérisé en ce que l'orifice d'aspiration dans l'enveloppe en feuille composite plastique-métal (14) est soudé par une couche de polyéthylène (24) appliquée.

4. Procédé selon l'une quelconque des revendications 1 à 3, caractérisé en ce qu'un vide de 0,1 mbar est obtenu après le ou les lavages avec du dioxyde de carbone, de sorte que des valeurs de conductibilité thermique inférieure à 0,01 W/mK sont obtenues dans la plage d'utilisation de températures d'environ à 20 à 130 K.

5. Panneaux superisolants (10) fabriqués selon l'une ou plusieurs des revendications du procédé précitées, caractérisés en que la couche métallique ou la vaporisation du métal (22) a une épaisseur de couche inférieure à 1,0 µm.

6. Panneaux superisolants (10) selon la revendication 5, caractérisés par une ou deux vaporisations d'aluminium (22) avec une épaisseur de couche de respectivement 0,3 à 0,5 µ.

7. Panneaux superisolants (10) selon les revendications 5 et 6, caractérisés par une forme d'ensemble en forme de tuile ou de coussin avec une base carrée ou rectangulaire.

8. Panneaux superisolants (10) selon les revendications 5 et 6, caractérisés par une largeur de 10 à 150 cm, une longueur de 50 à 150 cm et une hauteur de 30 à 100 mm pour un poids de 1 à 2 kg/module.

9. Utilisation d'un grand nombre de panneaux ou d'ensembles superisolants (10), dans une construction modulaire, selon l'une ou plusieurs des revendications 5 à 8 précédentes pour des conteneurs de transport de gaz et/ou de liquides très froids jusqu'à une température à l'intérieur du conteneur de 20°K.
